(19) **Europäisches Patentamt / European Patent Office / Office européen des brevets**

(11) **EP 2 154 168 A1**

(12) # EUROPEAN PATENT APPLICATION
published in accordance with Art. 153(4) EPC

(43) Date of publication:
**17.02.2010 Bulletin 2010/07**

(21) Application number: **08764525.5**

(22) Date of filing: **22.05.2008**

(51) Int Cl.:
*C08G 18/65* (2006.01)     *C08G 18/42* (2006.01)
*C09J 7/00* (2006.01)     *C09J 175/06* (2006.01)

(86) International application number:
**PCT/JP2008/059464**

(87) International publication number:
**WO 2008/149682 (11.12.2008 Gazette 2008/50)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.06.2007 JP 2007151607**

(71) Applicant: **Asahi Glass Company, Limited**
**Chiyoda-ku**
**Tokyo 100-8405 (JP)**

(72) Inventors:
• **NAKAMURA, Makito**
 **Kamisu-city**
 **Ibaraki 314-0195 (JP)**

• **SATO, Hisashi**
 **Kamisu-city**
 **Ibaraki 314-0195 (JP)**
• **ARAI, Takeaki**
 **Kamisu-city**
 **Ibaraki 314-0195 (JP)**

(74) Representative: **Hartz, Nikolai**
 **Wächtershäuser & Hartz**
 **Patentanwälte**
 **Weinstrasse 8**
 **80333 München (DE)**

(54) **RESIN COMPOSITION CONTAINING THERMOPLASTIC POLYURETHANE AND HOT-MELT ADHESIVE**

(57)     To present a resin composition comprising a thermoplastic polyurethane which can be melted at a low temperature, is capable of bonding in a short time and is excellent in flexibility; and a hot melt adhesive.

A resin composition comprising a thermoplastic polyurethane which has structural units derived from a diol compound (I) containing a polyester ether diol (A) which has an initiator (a), a dicarboxylic acid anhydride (b) and an alkylene oxide (c), a diisocyanate compound (II) and a chain extender (III), wherein ([II]+[III])/([I]+[II]+[III]) =0.20 to 0.40 where [I], [II] and [III] are the proportions by mass (mass%) of the structural units derived from the diol compound (I), the diisocyanate compound (II) and the chain extender (III), respectively; the NCO index is from 0.90 to 1.05; and the structural units derived from the dicarboxylic acid anhydride (b) are contained in an amount of from 10 to 50 mass% in the polyester ether diol (A).

EP 2 154 168 A1

**Description**

TECHNICAL FIELD

The present invention relates to a resin composition comprising a thermoplastic polyurethane, and a hot melt adhesive containing such a resin composition.

BACKGROUND ART

A resin composition comprising a thermoplastic polyurethane (hereinafter sometimes referred to as a polyurethane resin) to be used for a hot melt adhesive is obtained mainly by reacting a high molecular weight diol such as a polyester diol or polyether diol, with a diisocyanate compound and a low molecular weight diol as a chain extender. Such a hot melt adhesive is widely used as an adhesive for e.g. clothing, since its elongation at break is large, and its 100% modulus (elastic modulus at 100% elongation) is low, whereby the drape is good.

However, in a case where such a hot melt adhesive is used for an adherend having a low heat resistance, the heating temperature or the heating time will be restricted for the protection of the adherend, whereby the hot melt adhesive will not be sufficiently melted and impregnated to the adherend, and high adhesion was sometimes hardly obtainable. Further, it is necessary to shorten the cycle time in the bonding process, and a hot melt adhesive is desired whereby high adhesion can be obtained by heating at a low temperature and in a short time.

As a polyurethane resin useful for a hot melt adhesive capable of bonding at a low temperature in a short time, a polyurethane resin is conceivable having its melting temperature lowered by reducing its molecular weight by adjusting the mixing ratio of the diisocyanate compound to the hydroxy group-containing compound (a diol compound and a chain extender). However, such a polyurethane resin has a problem such that although the melting point may be lowered to some extent, the resin strength may also be lowered, whereby the adhesive property also tends to be low.

Patent Document 1 exemplifies a polyurethane resin having its melting temperature lowered by using a chain extender having a side chain of e.g. a methyl group or an ethyl group. However, such a polyurethane resin has a problem such that although the melting temperature is lowered, the cohesive strength of hard segments (segments made of a diisocyanate compound) tends to be low, whereby the resin strength also tends to be low.

Patent Document 2 exemplifies a polyurethane resin having its adhesive property and lamination processability at a low temperature improved by using a high molecular weight polyol having a molecular weight of from 400 to 800 and a low molecular weight polyol having a molecular weight of from 60 to 140 in combination. However, in such a polyurethane resin, the molecular weight of the above high molecular weight polyol is small as compared with one commonly used, whereby the distance between hard segments tends to be short. Accordingly, only a hard polyurethane resin is obtainable, and there will be a problem such that when used for bonding a soft adherend such as clothing, the drape of the adherend tends to be impaired.

Further, as a conventional diol compound to be used for a hot melt adhesive, a crystalline polyol such as an aliphatic polyester diol or a polycaprolactone diol may mainly be mentioned. However, in a case where such a crystalline polyol is used, it is difficult to provide the resin strength and flexibility in good balance. Therefore, there is a problem such that if it is attempted to increase the resin strength or adhesive property, the flexibility is likely to be impaired.

In order to solve such a problem, it is conceivable to mix a non-crystalline diol compound such as a polyoxypropylene diol to the crystalline polyol. However, the crystalline polyol and such a polyoxypropylene diol have poor compatibility, thus leading to separation or turbidity, which leads to a problem from the viewpoint of the production and the appearance.

Further, as a resin composition comprising a thermoplastic polyurethane, there may be mentioned one employing a polyester ether polyol obtainable by copolymerizing an alkylene oxide and lactone to an initiator such as a polyoxypropylene polyol (Patent Document 3) or one obtained by reacting a polyester polyol, a polyol having an oxyethylene chain and a polyisocyanate compound (Patent Document 4). However, such a polyurethane resin is not supposed to be used as a hot melt adhesive, and even if it is used for such an application, a high adhesive property may not be obtained.

As described above, it has been difficult to obtain a hot melt adhesive having a high flexibility and whereby a high adhesive property can be obtained at a low temperature in a short time. Accordingly, a polyurethane resin is desired which has a low melting temperature, is excellent in flexibility and whereby a hot melt adhesive which provides a high adhesive property by heating for a short time.

Patent Document 1: JP-A-2000-336142
Patent Document 2: JP-A-2005-126595
Patent Document 3: WO05/116102
Patent Document 4: WO05/010068

DISCLOSURE OF THE INVENTION

OBJECT TO BE ACCOMPLISHED BY THE INVENTION

The present invention is to provide a resin composition comprising a thermoplastic polyurethane which can be melted at a low temperature and is capable of providing a sufficient adhesive property by heating for a short time and excellent in flexibility, and a hot melt adhesive containing such a resin composition comprising a thermoplastic polyurethane.

MEANS TO ACCOMPLISH THE OBJECT

The resin composition comprising a thermoplastic polyurethane of the present invention, comprises a thermoplastic polyurethane which has structural units derived from a diol compound (I), a diisocyanate compound (II) and a chain extender (III), wherein ([II]+[III])/([I]+[II]+[III])=0.20 to 0.40 where [I], [II] and [III] are the proportions by mass (mass%) of the structural units derived from the diol compound (I), the diisocyanate compound (II) and the chain extender (III), respectively; a condition of $N_{II}/(M_I+M_{III})$=0.90 to 1.05 is satisfied, where $M_I$ is the number of moles of hydroxy groups in the diol compound (I), $N_{II}$ is the number of moles of isocyanate groups in the diisocyanate compound (II), and $M_{III}$ is the number of moles of functional groups reactive with the isocyanate groups in the chain extender (III); the diol compound (I) contains a polyester ether diol (A) which has structural units derived from an initiator (a) having two active hydrogen atoms per molecule, a dicarboxylic acid anhydride (b) and an alkylene oxide (c); and the structural units derived from the dicarboxylic acid anhydride (b) are contained in an amount of from 10 to 50 mass% in the polyester ether diol (A).

In the resin composition comprising a thermoplastic polyurethane of the present invention, the molar ratio of structural units derived from the dicarboxylic acid anhydride (b) and the alkylene oxide (c) in the polyester ether diol (A) is preferably such that [amount (mol) of the alkylene oxide (c)]/[amount (mol) of the dicarboxylic acid anhydride]=50/50 to 95/5.

Further, the structural units derived from the initiator (a) are preferably contained in an amount of from 1 to 60 mass% in the polyester ether diol (A).

Further, the dicarboxylic acid anhydride (b) is preferably phthalic anhydride, and the initiator (a) preferably has a hydroxy value-based molecular weight of from 62 to 4,000.

Further, the resin composition comprising a thermoplastic polyurethane of the present invention is preferably one which is obtained by reacting the diol compound (I) with the diisocyanate compound (II), followed by adding and reacting a chain extender (III).

The process for producing a resin composition comprising a thermoplastic polyurethane of the present invention comprises reacting a diol compound (I) with a diisocyanate compound (II) to form an isocyanate group terminal prepolymer and thereafter, reacting the isocyanate group terminal prepolymer with a chain extender (III), wherein ([II]+[III])/([I]+[II]+[III])=0.20 to 0.40 where [I], [II] and [III] are the proportions by mass (mass%) of the diol compound (I), the diisocyanate compound (II) and the chain extender (III), respectively; a condition of $N_{II}/(M_I+M_{III})$=0.90 to 1.05 is satisfied, where $M_I$ is the number of moles of hydroxy groups in the diol compound (I), $N_{II}$ is the number of moles of isocyanate groups in the diisocyanate compound (II), and $M_{III}$, is the number of moles of functional groups reactive with the isocyanate groups in the chain, extender (III); the diol compound (I) contains a polyester ether diol (A) which has structural units derived from an initiator (a) having two active hydrogen atoms per molecule, a dicarboxylic acid anhydride (b) and an alkylene oxide (c); and the structural units derived from the dicarboxylic acid anhydride (b) are contained in an amount of from 10 to 50 mass% in the polyester ether diol (A).

Further, the hot melt adhesive of the present invention contains the above resin composition comprising a thermoplastic polyurethane.

Further, the hot melt adhesive of the present invention is preferably used as an adhesive film for clothing fiber.

EFFECTS OF THE INVENTION

The resin composition comprising a thermoplastic polyurethane of the present invention has a low melting temperature, is capable of providing a sufficient adhesive property by heating for a short time and has high flexibility.

Further, according to the present invention, it is possible to present a hot melt adhesive which contains the resin composition comprising a thermoplastic polyurethane and which has a low melting temperature and is excellent in the flexibility and in providing an adhesive property in a short time.

BEST MODE FOR CARRYING OUT THE INVENTION

POLYURETHANE RESIN

The resin composition comprising a thermoplastic polyurethane of the present invention (hereinafter referred to as the polyurethane resin) comprises a thermoplastic polyurethane having structural units derived from a diol compound (I), a diisocyanate compound (II) and a chain extender (III).
The diol compound (I) contains a polyester ether diol (A) having structural units derived from an initiator (a), a dicarboxylic acid anhydride (b) and an alkylene oxide (c).

INITIATOR (a)

The initiator (a) may be any compound so long as it is a compound having two active hydrogen atoms per molecule, and it may, for example, be a polyether diol, a polyester ether diol, a polyester diol or a dihydric alcohol. Among them, a polyether diol is preferred, since a polyester ether diol (A) thereby obtainable will have a low viscosity and is excellent in working efficiency.
The polyether diol is a compound having a hydroxy value-based molecular weight of from 300 to 4,000 per hydroxy group, obtainable by adding an alkylene oxide to a dihydric alcohol, and it is preferably employed in a case where a composite metal cyanide complex catalyst is used as the catalyst (x) at the time of the production of a polyester ether diol (A) which will be described hereinafter.
The dihydric alcohol may, for example, be ethylene glycol, diethylene glycol, polyethylene glycol, propylene glycol, dipropylene glycol or 1,4-butanediol.
The hydroxy value-based molecular weight of the initiator (a) is preferably from 62 to 4,000, more preferably from 400 to 2,000. When the hydroxy value-based molecular weight is at least 62, the obtainable polyurethane resin will have flexibility. Further, when the hydroxy value-based molecular weight is at most 4,000, the mechanical strength and adhesive property of the obtainable polyurethane resin will be improved.
The structural units derived from the initiator (a) are preferably contained in an amount of from 1 to 60 mass%, more preferably from 10 to 60 mass%, in the polyester ether diol (A). When the content of the structural units derived from the initiator (a) is at least 1 mass%, the desired polyester ether diol (A) can readily be obtainable. Further, when the content of structural units derived from the initiator (a) is at most 60 mass%, the content of the dicarboxylic acid anhydride (b) in the polyester ether diol (A) can be made large, whereby the mechanical properties and adhesive property of the obtainable polyurethane resin will be improved.

DICARBOXYLIC ACID ANHYDRIDE (b)

The dicarboxylic acid anhydride (b) may, for example, be an aromatic dicarboxylic acid anhydride such as phthalic anhydride; an alicyclic dicarboxylic acid anhydride such as hexahydrophthalic anhydride, tetrahydrophthalic anhydride, methylhexahydrophthalic anhydride or methyltetrahydrophthalic anhydride; or a saturated or unsaturated aliphatic dicarboxylic acid anhydride such as maleic anhydride, succinic anhydride, dodecenylsuccinic anhydride or octadecenylsuccinic anhydride. Among them, phthalic anhydride is preferred. The reason is such that phthalic anhydride as an aromatic dicarboxylic acid anhydride has an extremely high cohesive force or polarity and contributes substantially to the adhesive property to various adherends.
The structural units derived from the dicarboxylic acid anhydride (b) are contained in an amount of from 10 to 50 mass% in the polyester ether diol (A). Further, such a content is preferably from 15 to 40 mass%. When the content of the structural units derived from the dicarboxylic acid anhydride (b) is at least 10 mass%, it is possible to obtain a polyurethane resin excellent in the adhesive property. Further, when the content of the structural units derived from the dicarboxylic acid anhydride (b) is at most 50 mass%, it is possible to obtain a polyurethane resin excellent in flexibility.

ALKYLENE OXIDE (c)

The alkylene oxide (c) is preferably a $C_{2-4}$ alkylene oxide, and it may, for example, be propylene oxide, 1,2-butylene oxide, 2,3-butylene oxide or ethylene oxide. As the alkylene oxide, one type may be used alone, or two or more types may be used in combination. As the alkylene oxide (c), it is preferred to employ ethylene oxide or propylene oxide, or it is more preferred to employ propylene oxide alone.
The molar ratio of the alkylene oxide (c) to the dicarboxylic acid anhydride (b) is preferably such that [amount (mol) of the alkylene oxide (c)]/[amount (mol) of the dicarboxylic acid anhydride (b)]=50/50 to 95/5, more preferably 50/50 to 80/20. When the molar ratio of the alkylene oxide (c) to the dicarboxylic acid anhydride (b) is at least the above lower limit, the amount of an unreacted dicarboxylic acid anhydride (b) in the polyester ether diol (A) can be suppressed, and the acid value of the polyester ether diol (A) can be made low. Further, when the molar ratio of the alkylene oxide (c) is at most the above upper limit, the adhesive property and flexibility of the obtainable polyurethane resin can be improved.

Further, the alkylene oxide (c) may be added in excess to the dicarboxylic acid anhydride (b) to let the alkylene oxide (c) undergo addition reaction in block at the terminals thereby to reduce the acid value of the obtainable polyester ether diol (A).

Further, in the copolymer chain (the portion wherein the dicarboxylic acid anhydride (b) and the alkylene oxide (c) are copolymerized) in the polyester ether diol (A), the dicarboxylic acid anhydride (b) and the alkylene oxide (c) may alternately have undergone addition reaction, or the alkylene oxide (c) may have undergone addition reaction in block. However, as between the dicarboxylic acid anhydride (b) and the alkylene oxide (c), the dicarboxylic acid anhydride (b) is superior in the reactivity, and the dicarboxylic acid anhydride (c) does not undergo addition reaction continuously, whereby the alkylene oxide (c) block in the copolymer chain is short at a level of a few pieces of the alkylene oxide (c). Therefore, by adjusting the hydroxy value-based molecular weight of the initiator (a) and the amount of addition of the alkylene oxide (c) at the terminal portions, the entire structure of the polyester ether diol (A) can be designed.

POLYESTER ETHER DIOL (A)

The polyester ether diol (A) preferably has a hydroxy value-based molecular weight per hydroxy group of from 250 to 10,000, more preferably from 1,000 to 10,000, further preferably from 1,000 to 5,000. When the hydroxy value-based molecular weight per hydroxy group is at least 250, the mechanical properties and flexibility of the obtainable polyurethane resin will be improved, and the adhesive property to the adherend will be improved. Further, when the hydroxy value-based molecular weight per hydroxy group is at most 10,000, the mechanical properties of the obtainable polyurethane resin will be improved, and the viscosity can easily be made low.

The hydroxy group-based molecular weight of the polyester ether diol (A) can easily be adjusted by suitably adjusting the moles of the dicarboxylic acid anhydride (b) and the alkylene oxide (c) to be copolymerized to the initiator (a).

Here, the hydroxy group-based molecular weight means a molecular weight calculated by using the following formula based on the number of hydroxy groups of the polyol.

$$[\text{Hydroxy group-based molecular weight}] = (56,100/[\text{hydroxy value}]) \times [\text{number of hydroxy groups of the polyol}]$$

Further, the polyester ether diol (A) preferably has an average molecular weight (M') per copolymer chain of from 100 to 3,000, more preferably from 200 to 2,000. Here, the average molecular weight (M') per copolymer chain means an average molecular weight per one copolymer chain formed copolymerization of the dicarboxylic acid anhydride (b) and the alkylene oxide (c), and it is a value obtained by deducting from the hydroxy value-based molecular weight of the initiator (a) and dividing the obtained molecular weight by the number of functional groups of the initiator (a).

When the average molecular weight (M') per copolymer chain is at least 100, the adhesive property of the obtainable polyurethane resin will be improved. Further, when the average molecular weight (M') per copolymer chain is at most 3,000, the viscosity of the obtainable polyester ether diol (A) will not be too high. The average molecular weight (M') per copolymer chain can easily be adjusted by suitably adjusting the moles of the dicarboxylic acid anhydride (b) and the alkylene oxide (c) to be copolymerized to the initiator (a), like the hydroxy value-based molecular weight.

The acid value of the polyester ether diol (A) is preferably at most 2.0 mgKOH/g, more preferably at most 1.0 mgKOH/g, and it may be 0. When the acid value of the polyester ether diol (A) is at most 2.0 mgKOH/g, the reactivity with the diisocyanate compound will be good, and the hydrolysis resistance of the obtainable polyurethane resin will be improved.

DIOL COMPOUND (I)

The diol compound (I) may contain in addition to the polyester ether diol (A) another diol (B). Such another diol (B) may, for example, be a polyester ether diol other than the polyester ether diol (A); a polyoxypropylene diol, a polyoxyethylene diol or a polyoxyethylenepropylene diol, obtainable by ring-opening addition polymerization of an alkylene oxide using as an initiator a compound having two active hydrogen atoms per molecule; a polyester diol obtainable by a condensation reaction of a dihydric alcohol with a dibasic carboxylic acid; or a polyester diol, a polyoxytetramethylene diol, a polycarbonate diol or the like, obtainable by ring-opening addition polymerization of a lactone monomer using a dihydric alcohol as an initiator.

The hydroxy value-based molecular weight per hydroxy group of such another diol (B) is preferably from 250 to 10,000, more preferably from 1,000 to 10,000, further preferably from 1,000 to 5,000.

The content of the polyester ether diol (A) in the diol compound (I) (100 mass%) is preferably at least 30 mass%, more preferably at least 50 mass%, further preferably substantially 100 mass%.

The hydroxy value-based molecular weight per hydroxy group of the diol compound (I) is preferably from 250 to 10,000, more preferably from 1,000 to 10,000, particularly preferably from 1,000 to 5,000.

DIISOCYANATE COMPOUND (II)

The diisocyanate compound (II) may be any one so long as it can be reacted with the diol compound (I) and the chain extender (III) to obtain a polyurethane resin. It may, for example, be an aromatic diisocyanate compound such as diphenylmethane diisocyanate, 2,4-tolylene diisocyanate or 2,6-tolylene diisocyanate; an aralkyl diisocyanate compound such as xylylene diisocyanate or methatetramethylxylene diisocyanate; an aliphatic diisocyanate compound such as hexamethylene diisocyanate or 2,2,4-trimethylhexamethylene diisocyanate; an alicyclic diisocyanate compound such as isophorone diisocyanate or 4,4'-methylenebis(cyclohexyl isocyanate); as well as an urethane modified product obtained from such a diisocyanate compound. Among them, an aromatic diisocyanate and its urethane modified product are preferred, and diphenylmethane diisocyanate, 2,4-tolylene diisocyanate, 2,6-tolylene diisocyanate and their urethane modified products are more preferred, since they are excellent in the reactivity with a polymer diol, and the resin strength and adhesive property of the polyurethane resin thereby obtainable will be good.

As the diisocyanate compound (II), one type may be used alone, or two or more types may be used in combination.

CHAIN EXTENDER (III)

The chain extender (III) is a compound having two functional groups capable of reacting with an isocyanate group, and it is preferably one having a hydroxy value-based molecular weight of at most 500, more preferably one having a hydroxy value-based molecular weight of at most 300.
The functional groups are preferably hydroxy groups or primary or secondary amino groups.

The chain extender (III) may, for example, be a dihydric alcohol such as ethylene glycol, propylene glycol, 1,4-butanediol, 1,5-pentanediol or 1,6-hexanediol; an amino alcohol such as ethanolamine, aminopropyl alcohol, 3-aminocyclohexyl alcohol or p-aminobenzyl alcohol; a diamine such as ethylenediamine, 1,2-propylenediamine, 1,4-butylenediamine, 2,3-butylenediamine, hexamethylenediamine, cyclohexanediamine, piperazine, xylylenediamine, tolylenediamine, phenylenediamine, diphenylmethanediamine or 3,3'-dichlorodiphenylmethanediamine; a hydrazine such as hydrazine, monoalkylhydrazine or 1,4-dihydrazinodiethylene; or a dihydrazide such as carbohydrazide or adipic acid hydrazide. Among them, a dihydric alcohol is preferred.

As the chain extender (III), one type may be used alone, or two or more types may be used in combination.

CONSTITUTION OF POLYURETHANE RESIN

The resin composition comprising a thermoplastic polyurethane of the present invention comprises a thermoplastic polyurethane having structural units derived from the diol compound (I), the diisocyanate compound (II) and the chain extender (III) as described above, and ([II]+[III])/([I]+[II]+[III])=0.20 to 040, where [I], [II] and [III] are the mass proportions (mass%) of the structural units derived from the diol compound (I), the diisocyanate compound (II) and the chain extender (III), respectively. Further, the value of the above formula is preferably from 0.20 to 0.35.

When the value of the above formula is at least 0.20, the polyurethane resin will have a sufficient adhesive property, and its melting temperature will not be too low. Further, when the value of the above formula is at most 0.40, the polyurethane resin has adequate flexibility.

Further, the diol compound (I), the diisocyanate compound (II) and the chain extender (III), satisfy a condition of $N_{II}/(M_I+M_{III})=0.90$ to 1.05, where $M_I$ is the number of moles of hydroxy groups in the diol compound (I), $M_{III}$ is the number of moles of functional groups reactive with the isocyanate groups in the chain extender (III), and $M_{II}$ is the number of moles of isocyanate groups in the diisocyanate compound (II). Further, the value of the above formula is preferably from 0.90 to 1.02, more preferably from 0.92 to 0.98. When the value of the above formula is at least 0.90, the obtainable polyurethane resin will have an excellent mechanical strength. Further, when the value of the above formula is at most 1.50, the obtainable polyurethane resin will have an excellent fluidity under heating.

Here, the number of moles of functional groups reactive with isocyanate groups in the chain extender (III) means the total number of moles of hydroxy groups and primary or secondary amino groups.

The resin composition comprising a thermoplastic polyurethane may contain a stabilizer in addition to the thermoplastic polyurethane. The stabilizer may be various stabilizers such as antioxidant, an ultraviolet absorber, a photostabilizer, etc. The amount of such a stabilizer is preferably from 0.1 to 5 parts by mass, more preferably from 0.1 to 1 part by mass, per 100 parts by mass of the polyurethane resin.

HOT MELT ADHESIVE

The hot melt adhesive of the present invention is an adhesive containing the polyurethane resin as described above. The hot melt adhesive may contain various additives as the case requires, in addition to the polyurethane resin. Such additives may be various stabilizers such as an antioxidant, an ultraviolet absorber, a photostabilizer, etc.

The amount of such additives is preferably from 0.1 to 5 parts by mass per 100 parts by mass of the polyurethane resin.

In the present invention, sufficient flexibility and adhesive property can be simultaneously satisfied even without using a plasticizer. However, depending upon the particular case, the flexibility and fluidity under heating can be adjusted by incorporating a plasticizer as an additive.

The amount of the plasticizer is preferably from 0 to 20 parts by mass, more preferably more than 0 to 10 parts by mass per 100 parts by mass of the polyurethane resin. When the amount of the plasticizer is at most 20 parts by mass, deterioration of the adhesive property due to bleeding out of the plasticizer may be avoided.

Further, the hot melt adhesive of the present invention is useful as an adhesive film for clothing.

PROCESS FOR PRODUCING POLYURETHANE RESIN

Now, the process for producing a resin composition comprising a thermoplastic polyurethane of the present invention will be described.

The polyester ether diol (A) in the present invention can be produced by copolymerizing a dicarboxylic acid anhydride (b) and an alkylene oxide (c) to an initiator (a). For the production of the polyester ether diol (A), it is preferred to use a catalyst (x), whereby the speed for the polymerization reaction will be high.

CATALYST (x)

As the catalyst (x), a ring-opening addition polymerization catalyst is preferably used. For example, an alkali catalyst such as potassium hydroxide or cesium hydroxide; a composite metal cyanide complex catalyst; or a phosphazene catalyst may be mentioned. Among them, a composite metal cyanide complex catalyst is particularly preferred, since it is thereby possible to obtain a polyester ether diol (A) having a smaller ratio of the weight average molecular weight to the number average molecular weight (Mw/Mn).

The composite metal cyanide complex catalyst is preferably one having an organic ligand coordinated to a zinc hexacyano cobaltate complex. The organic ligand may, for example, be an ether such as ethylene glycol dimethyl ether or diethylene glycol dimethyl ether, or an alcohol such as tert-butyl alcohol.

The amount of the catalyst (x) is preferably from 0.0001 to 0.1 mass%, more preferably from 0.003 to 0.03 mass%, based on the polyester ether diol (A) as the product. When the amount of the catalyst (x) is at least 0.0001 mass%, the polymerization reaction will be adequately proceeded. And, when the amount of the catalyst (x) is at most 0.1 mass%, an adverse effect of the remaining catalyst will be little.

PROCESS FOR PRODUCING POLYESTER ETHER DIOL (A)

The process for producing a polyester ether diol (A) is preferably as follows.

Firstly, the initiator (a), the dicarboxylic acid anhydride (b) and the catalyst (x) are preliminarily put in a reactor, and the alkylene oxide (c) is slowly added and reacted thereto.

In such a reaction, the ring-opening reaction of the dicarboxylic acid anhydride (b) is quicker than the ring-opening reaction of the alkylene oxide (c), and the dicarboxylic acid anhydride (b) does not continuously undergo addition reaction, whereby a polyester ether diol (A) having a copolymer chain wherein the dicarboxylic acid anhydride (b) and the alkylene oxide (c) are alternately added, will be obtained.

Then, the diol compound (I) containing the obtained polyester ether diol (A) is reacted with the diisocyanate compound (II) and the chain extender (III) to obtain a polyurethane resin.

The method to obtain the polyurethane resin may, for example, be a known method such as (1) a method (one shot method) wherein the diol compound (I), the diisocyanate compound (II) and the chain extender (III) are reacted all at once, or (2) a method (prepolymer method) wherein the diol compound (I) and the diisocyanate compound (II) are preliminarily reacted to obtain an isocyanate group terminal prepolymer, and then, the chain extender (III) is added to carry out the chain extending reaction. The polyurethane resin of the present invention is preferably produced by the prepolymer method (2), whereby the forming processability will be excellent.

PREPOLYMER METHOD

Now, the process for producing a polyurethane resin employing the prepolymer method will be described.

A known method may be used as the method of preliminarily reacting the diol compound (I) and the diisocyanate compound (II) to obtain an isocyanate group terminal prepolymer. For example, there is a method wherein the diol compound (I) and the diisocyanate compound (II) are heated and reacted at from 60 to 100˚C for from 1 to 20 hours in a dry nitrogen stream. In such a reaction, it is preferred to react the diol compound (I) and the diisocyanate compound (II) within a range of from $N_{II}/M_I$=1.8 to 2.5. The value of $N_{II}/M_I$ is more preferably from 2.0 to 2.5. When the value of $N_{II}/M_I$ is at least 1.8, the viscosity of the obtainable isocyanate group terminal prepolymer will not be too high, and the working efficiency will be improved. Further, when the value of $N_{II}/M_I$ is at most 2.5, it is possible to suppress foaming of the obtainable polyurethane resin at the time of reacting the prepolymer with the chain extender (III).

Then, the isocyanate group terminal prepolymer obtained by the above method is reacted with a chain extender (III) to produce a polyurethane resin. In such a reaction, the chain extender (III) and the isocyanate group terminal prepolymer are reacted to satisfy $N_{II}/(M_I+M_{III})$=0.90 to 1.05 and $([II]+[III])/([I]+[II]+[III])$=0.20 to 0.40.

The reaction temperature of the isocyanate group terminal prepolymer with the chain extender (III) is preferably from 80 to 180˚C. When the reaction temperature is at least 80˚C, a sufficient reaction rate can be obtained. And, when the reaction temperature is at most 180˚C, there will be little possibility of a trouble of e.g. curing before the raw material is not sufficient. mixed. The reaction temperature may be suitably set at a proper level at each reaction stage.

The reaction of the isocyanate group terminal prepolymer with the chain extender (III) may be carried out in a solvent. For example, in a solvent, the isocyanate group terminal prepolymer is synthesized to obtain an isocyanate group terminal prepolymer solution, and the chain extender (III) is added to such a solution to obtain a solution containing a polyurethane resin. As such a solvent, a known compound (an alcohol, a ketone, an ester, an aliphatic hydrocarbon, an aromatic hydrocarbon or the like) may be used.

In the reaction of the diol compound (I) with the diisocyanate compound (II) and in the reaction of the isocyanate group terminal prepolymer with the chain extender (III), a known urethane-forming reaction catalyst may be employed.

The urethane-forming reaction catalyst may, for example, be an organic tin compound such as dibutyltin dilaurate, dioctyltin dilaurate, dibutyltin dioctoate or tin 2-ethylhexanoate; an iron compound such as iron acetyl acetonate or ferric chloride; or a tertiary amine catalyst such as triethylamine or triethyldiamine. Among them, an organic tin compound is preferred.

The amount of the urethane-forming reaction catalyst is preferably from 0.0001 to 1.0 part by mass, more preferably from 0.0001 to 0.05 part by mass, per 100 parts by mass of the total mass of the isocyanate group terminal prepolymer and the chain extender (III). For example, in a case where the isocyanate group terminal prepolymer and the chain extender (III) are reacted in a mold to obtain a molded product, by adjusting the amount of the urethane-forming reaction catalyst to be at least 0.0001 part by mass, the time for releasing the molded product from the mold can be easily facilitated to a permissible time, and by adjusting it to be at most 1.0 part by mass, it is possible to prolong the curing reaction of the reaction mixture to a proper level to secure a preferred pot life.

CHARACTERISTICS

As described above, the resin composition comprising a thermoplastic polyurethane and the hot melt adhesive of the present invention have a low melting temperature, are capable of providing an adequate adhesive property even by heating for a short time and also have high flexibility.

As a reason for the adequate adhesive property, it may be mentioned that the diol compound (I) contains a polyester ether diol (A) containing structural units derived from the dicarboxylic acid anhydride (b). In the polyurethane resin, the polyester portion contributes to the adhesive property and resin strength. In the polyester ether diol (A) of the present invention, the carboxylic acid anhydride (b) and the alkylene oxide (c) may have alternately undergone addition reaction, or the alkylene oxide (c) has undergone addition reaction in block. However, the number of alkylene oxide (c) constituting the alkylene oxide (c) block is small at a level of a few pieces, and two moles of ester groups are present per one mole of the carboxylic acid anhydride (b), whereby it is considered that the distance between the ester bonds in the copolymer chain can constantly be maintained to be short to accomplish the high adhesive property and resin strength.

On the other hand, in a case where lactone is employed instead of the dicarboxylic acid anhydride (b), to synthesize a diol compound having a similar polyester portion, and a polyurethane resin is obtained by such a diol compound, it is not possible to obtain a high adhesive property. The reason is considered to be such that by the copolymerization of the lactone and alkylene oxide, only one mole of the ester group is present per one mole of lactone, whereby as compared with the case of using the carboxylic acid anhydride (b), the distance between ester bonds tends to be long.

Further, the polyester ether polyol (A) is superior also in that it simultaneously has a polyether portion and a polyester portion in its molecule and thus can satisfy both the flexibility which is a merit of the polyether type and the adhesive property and resin strength which are merits of the polyester type.

Even if a diol compound containing a polyester diol and a polyether diol in a similar ratio, is employed, it is difficult to obtain a polyurethane resin having the flexibility, adhesive property and resin strength at the same time. The following two reasons may be mentioned. It is not possible to obtain a uniform mixture even if a polymer obtained by reacting a polyester diol with a diisocyanate compound and a polymer obtained by reacting a polyether diol with a diisocyanate compound are mixed. Further, even if a polyester diol and a polyether diol are preliminarily mixed, and a diisocyanate compound is reacted to the mixture, there will be a problem such that their compatibility is inadequate, and when the prepolymer is stored, separation is likely to result.

EXAMPLES

Now, the present invention will be described in detail with reference to Examples and Comparative Examples. However, it should be understood that the present invention is by no means restricted to the following description. In the following description, "parts" means "parts by mass".

Firstly, preparation of the polyester ether diol (A) will be described.

PREPARATION EXAMPLE 1

Polyoxypropylene diol as the initiator (a), phthalic anhydride as the dicarboxylic acid anhydride (b), propylene oxide as the alkylene oxide (c), and zinc hexacyanocobaltate-tert-butyl alcohol complex as the catalyst (x), were used.

Into a pressure resistant reactor equipped with a stirrer and a nitrogen-introducing tube, 2,000 g of polyoxypropylene diol having a hydroxy value of 112 mgKOH/g was put. Then, 800 g (5.4 mol) of phthalic anhydride (PA) was put into the reactor and stirred. Then, 0.4 g of zinc hexacyanocobaltate-tert-butyl alcohol complex (DMC-TBA complex) was added, and further, 1,200 g (20.6 mol) of propylene oxide (PO) was slowly added to carry out a reaction at 130°C for 7 hours in a nitrogen atmosphere. Thereafter, upon confirming that a decrease in the internal pressure of the reactor stopped, the product was withdrawn from the reactor to obtain a polyester ether diol (A) (hereinafter referred to as the diol A1 having the phthalic anhydride and propylene oxide polymerized to the terminals of the polyoxypropylene diol. The diol A1 had a hydroxy value of 58.3 mgKOH/g, and from the result of measurement of $^1$H-NMR, it was confirmed to have a copolymer chain of phthalic anhydride and propylene oxide.

Further, the hydroxy value-based molecular weight and the viscosity of the obtained polyester ether diol (A) were calculated by the following methods.

HYDROXY VALUE-BASED MOLECULAR WEIGHT

The hydroxy value-based molecular weight of the obtained polyester ether diol (A) is a value calculated by the following formula by using a hydroxy value measured by a method in accordance with JIS K1557.

$$\text{(Hydroxy value-based molecular weight)} = [56,100/\text{(hydroxy value)}] \times 2$$

VISCOSITY

The value of the viscosity is a value (unit: m Pa•s) obtainable by measurement by a method in accordance with JIS K1557 (1970 edition) by using an E type viscometer under a condition of 25°C.

The respective values of the hydroxy value of the initiator (a), the amounts (charged mass) of the initiator (a), dicarboxylic acid anhydride (b) and alkylene oxide (c), the mass ratio of the dicarboxylic acid anhydride (b) to the alkylene oxide (c) ((c)/(b)), the content of the dicarboxylic acid anhydride (b) in the obtained diol A1, and the hydroxy value, the hydroxy value-based molecular weight, the average molecular weight (M') per a copolymer chain, the glass transition temperature, the acid value and the viscosity, of the diol A1, are shown in Table 1. Here, the average molecular weight (M') per copolymer chain is a value obtained by deducting from the hydroxy value-based molecular weight, the hydroxy value-based molecular weight of the initiator (a) and dividing the obtained hydroxy value-based molecular weight by the number of functional groups in the initiator (a), as shown by the following formula.

[Average molecular weight (M') per copolymer chain] = ([hydroxy value-based molecular weight] - [hydroxy value-based molecular weight of the initiator (a)])/[number of functional groups in the initiator (a)]

PREPARATION EXAMPLES 2 AND 3

Polyester ether diols (A) were obtained in the same manner as in Preparation Example 1 except that the hydroxy value of initiator (a), and the amounts of the initiator (a), dicarboxylic acid anhydride (b), alkylene oxide (c) and catalyst (x) were changed as shown in Table 1. The obtained polyester ether diols (A) are designated as a diol A2 and a diol A3, respectively.

The respective physical property values etc. obtained with respect to the diol A2 and the diol A3 are shown in Table 1.

TABLE 1

| Preparation Examples | | | 1(A1) | 2 (A2) | 3 (A3) |
|---|---|---|---|---|---|
| Polyester ether diol (A) | Initiator (a) | Mass (g) | 2,000 | 1,435 | 1,913 |
| | | Hydroxy value (mgKOH/g) | 112 | 160 | 112.2 |
| | | Content (mass%) | 50 | 35 | 43 |
| | | Molecular weight | 1,000 | 700 | 1,000 |
| | Dicarboxylic acid anhydride (b) | Mass (g) | 800 | 1,214 | 1,588 |
| | | Content (mass%) | 20 | 30 | 36 |
| | Alkylene oxide (c) | Mass (g) | 1,200 | 1,451 | 899 |
| | Catalyst (x) | Mass (g) | 0.40 | 0.40 | 0.44 |
| | Molar ratio (c)/(b) (mol/mol) | | 79.3/20.7 | 75.3/24.7 | 59.2/40.9 |
| | Hydroxy value (mgKOH/g) | | 58.3 | 59.0 | 50.0 |
| | Hydroxy value-based molecular weight | | 1,930 | 1,900 | 2,200 |
| | Average molecular weight (M') per copolymer chain | | 464 | 599 | 600 |
| | Glass transition temperature (˚C) | | -56.1 | -41.5 | -33.2 |
| | Acid value (mgKOH/g) | | 0.11 | 0.14 | 0.82 |
| | Viscosity (mPa•s) (25˚C) | | 4,500 | 26,200 | >100,000 |

Now, production of a polyester ether diol obtainable by randomly copolymerizing caprolactone and propylene oxide to a polyoxypropylene diol will be described.

PREPARATION EXAMPLE 4

Into a pressure resistant reactor equipped with a stirrer and a nitrogen introducing tube, 2,000 g of a polyoxypropylene diol having a hydroxy value of 160 mgKOH/g was put as an initiator. Then, 9.0 g of DMC-TBA complex was added as a catalyst, and further, 4,000 g of a mixture comprising 2,000 g (34.4 mol) of propylene oxide and 2,000 g (17.5 mol) of ε-caprolactone, was slowly added to carry out a reaction at 150˚C for 7 hours in a nitrogen atmosphere. Upon confirming that the decrease of the inner pressure of the reactor stopped, non-reacted materials were recovered by deaeration under reduced pressure. However, ε-caprolactone and propylene oxide were not recovered, and it was confirmed that the raw materials were all reacted. Thereafter, the product was withdrawn from the reactor to obtain a polyester ether diol (hydroxy value: 55.8 mgKOH/g) having ε-caprolactone and propylene oxide copolymerized to the polyoxypropylene diol. The obtained polyester ether diol is designated as a diol A'1. Further, from the results of measurement of $^1$H-NMR (nuclear magnetic resonance spectrum), it was found that the diol A'1 had a random copolymer chain of ε-caprolactone and propylene oxide.

Various physical properties, etc. obtained with respect to the diol A'1 are shown in Table 2.

TABLE 2

| Preparation Example | | | 4 (A'1) |
|---|---|---|---|
| Polyester ether diol | Initiator | Mass (g) | 2,000 |
| | | Hydroxy value (mgKOH/g) | 160 |
| | | Content (mass%) | 33 |
| | | Molecular weight | 700 |
| | ε-caprolactone | Mass (g) | 2,000 |
| | | Content (mass%) | 33 |
| | Alkylene oxide | Mass (g) | 2,000 |
| | Catalyst | Mass (g) | 9.00 |
| | Molar ratio (alkylene oxide)/( ε-caprolactone) (mol/mol) | | 66.3/33.7 |
| | Hydroxy value (mgKOH/g) | | 55.8 |
| | Hydroxy value-based molecular weight | | 2,010 |
| | Average molecular weight (M') per copolymer chain | | 655 |
| | Glass transition temperature (˚C) | | -75.0 |
| | Acid value (mgKOH/g) | | 0.03 |
| | Viscosity (mPa•s) (25˚C) | | 870 |

Now, preparation of isocyanate group-containing urethane prepolymers (hereinafter sometimes referred to as prepolymers) by using polyester ether diols in Preparation Examples 1 to 4 and other polyols (B) will be described.

PREPARATION EXAMPLE 5

Into a four-necked flask equipped with a stirrer, a reflux condenser, a nitrogen introducing tube, a thermometer and a dropping funnel, 100 parts of the diol A1 prepared in Preparation Example 1 and 28 parts of diphenylmethane diisocyanate (product name: Millionate MT, manufactured by

Nippon Polyurethane Industry Co., Ltd.) as a diisocyanate compound (II) were charged and gradually heated to 80˚C to carry out a prepolymer-forming reaction for 4 hours. After the reaction, a part of the content was taken out, and the content of isocyanate groups (hereinafter referred to as the NCO group content) was measured. Upon confirming that the measured NCO group content was at most the theoretically calculated content, the reaction was terminated to obtain an isocyanate group-containing urethane prepolymer (prepolymer P1). The charged amounts of the raw materials, the NCO index of the prepolymer, and the NCO group content (unit: mass%) of the obtained prepolymer P1, are shown in Table 3. Here, the NCO index of the prepolymer means the above-mentioned value of $N_{II}/M_I$.

PREPARATION EXAMPLES 6 TO 14

Prepolymers were obtained in the same manner as in Preparation Example 5 except that the types and amounts of the diol compound (I) and the diisocyanate compound (II) used as the raw materials, were changed as shown in Table 3. The NCO indices and the NCO group contents (unit: mass%) of the obtained prepolymers P2 to P10 are shown in Table 3.

The prepolymer P6 in Preparation Example 10 underwent separation into two phases, and no accurate viscosity was measured, and it was not used for the reaction with the chain extender (III). Further, the prepolymer P7 in Preparation Example 11 had a viscosity which was so high that it was not used for the reaction with the chain extender (III).

TABLE 3

| Preparation Examples | | | | 5 (P1) | 6 (P2) | 7 (P3) | 8 (P4) | 9 (P5) | 10 (P6) | 11 (P7) | 12 (P8) | 13 (P9) | 14 (P10) |
|---|---|---|---|---|---|---|---|---|---|---|---|---|---|
| Prepolymers | Diol Compound (I) | Polyester ether diol (A) | A1 | 100 | - | - | - | - | - | - | - | - | - |
| | | | A2 | - | 100 | - | - | - | - | - | - | - | - |
| | | | A3 | - | - | 100 | 100 | - | - | - | - | - | - |
| | | Polyester ether diol | A'1 | - | - | - | - | 100 | - | - | - | - | - |
| | | Other diols (B) | PPG | - | - | - | - | - | 50 | - | - | - | - |
| | | | 3MPD /IP | - | - | - | - | - | 50 | 100 | - | - | - |
| | | | PBA | - | - | - | - | - | - | - | 100 | - | - |
| | | | PBEA | - | - | - | - | - | - | - | - | 100 | |
| | | | PCL | - | - | - | - | - | - | - | - | - | 100 |
| | Diisocyanate compound (II) | | MDI | 28 | 27.3 | 27.6 | 26.8 | 27.2 | 27 | 28 | 45.3 | 44.8 | 50.4 |
| NCO index | | | | 2.19 | 2.12 | 2.48 | 2.40 | 2.17 | 2.10 | 2.24 | 1.93 | 2.02 | 2.00 |
| NCO group content (mass%) | | | | 4.00 | 3.81 | 4.33 | 4.15 | 3.88 | 3.80 | 4.06 | 5.05 | 4.98 | 5.63 |
| Viscosity (mPa·s) (60°C) | | | | 9,200 | 30,200 | 50,600 | 52,000 | 2,600 | Not measureable | >100,000 | 21,000 | 11,000 | 5,600 |
| Appearance | | | | Uniform | Uniform | Uniform | Uniform | Uniform | Separated into two layers | Uniform | Uniform | Uniform | Uniform |

The abbreviations in Table 3 have the following meanings.
PPG: polyoxypropylene diol (product name: EXCENOL 2020, manufactured by Asahi Glass Company, Limited)
3MDP/IP: 3-methylpentane diol isophthalate (product name: P-2030, manufactured by Kuraray Co., Ltd.)
PBA: polybutylene adipate (product name: Nipporan 4009, manufactured by Nippon Polyurethane Industry Co., Ltd.)
PBEA: polybutylene ethylene adipate (product name: TA-22-276U, manufactured by Hitachi Kasei Polymer Co., Ltd.)
PCL: polycaprolactone diol (product name: PLACCEL 210A, manufactured by Daicel Chemical Industries, Ltd.)

EXAMPLE 1

Then, a reaction of the prepolymer with the chain extender (III) was carried out as follows.
The prepolymer P1 (30 parts) of Preparation Example 5 having the temperature adjusted at 80°C, and 1,4-butanediol (1.24 parts) as the chain extender (III) were weighed. Then, by using a rotation/revolution mixer (product name: Awatori Rentaro ARE-250, manufactured by Thinky), the prepolymer P1 and 1,4-butanediol were stirred (3 minutes) and defoamed (one minute). The solution after mixing was cast into a mold having a thickness of 150 μm and 1 mm and heat-cured at 130°C for 6 hours to carry out a chain extending reaction to obtain a sheet-form polyurethane resin (polyurethane U1). The NCO index of the obtained polyurethane resin is identified in Table 4. Here, the NCO index of the polyurethane resin means the above-mentioned value of $N_{II}/(M_I+M_{III})$'

EXAMPLES 2 TO 4

Sheet-form polyurethane resins (polyurethane U2 to U4) were obtained in the same manner as in Example 1 except that the types and amounts of the prepolymer and chain extender used were changed as shown in Table 4.

TABLE 4

| | | | Ex.1 | Ex.2 | Ex.3 | Ex.4 | Comp. Ex.1 | Comp. Ex.2 | Comp. Ex.3 | Comp. Ex.4 |
|---|---|---|---|---|---|---|---|---|---|---|
| Thermoplastic polyurethane resin composition | Prepolymer | P1 | 30 | - | - | - | - | - | - | - |
| | | P2 | - | 30 | - | - | - | - | - | - |
| | | P3 | - | - | 30 | - | - | - | - | - |
| | | P4 | - | - | - | 30 | - | - | - | - |
| | | P5 | - | - | - | - | 30 | - | - | - |
| | | P8 | - | - | - | - | - | 30 | - | - |
| | | P9 | - | - | - | - | - | - | 30 | - |
| | | P10 | - | - | - | - | - | - | - | 30 |
| | Chain extender (III) | 1,4-butanediol | 1.24 | 1.43 | 1.35 | 1.54 | 1.45 | 1.76 | 1.74 | 1.88 |
| | ([II]+[III])/([I]+[II]+[III]) (mass ratio) | | 0.25 | 0.25 | 0.25 | 0.25 | 0.25 | 0.35 | 0.35 | 0.37 |
| | NCO index | | 0.96 | 0.92 | 1.02 | 0.92 | 0.92 | 0.96 | 0.96 | 0.91 |
| | Sheet-form polyurethane resin | | U1 | U2 | U3 | U4 | U5 | U6 | U7 | U8 |

COMPARATIVE EXAMPLES 1 TO 4

Sheet-form polyurethane resins (polyurethane U5 to U8) were obtained in the same manner as in Example 1 except that the types and amounts of the prepolymer and chain extender used, were changed as shown in Table 4.
The tests of the obtained sheet-form polyurethane resins were carried out as follows.

MECHANICAL PROPERTIES

With respect to the sheet-form polyurethane resins (U1 to U8) molded by a mold of 150 $\mu$m, the 100% modulus $M_{100}$ (unit: MPa), the 300% modulus $M_{100}$ (unit: MPa), the tensile strength at break $T_s$ (unit: MPa) and the elongation (unit: %) were measured by using a tensilon (product name: RTE-2000, manufactured by Orientec) under a condition of a tensile speed of 300 mm/min. Further, with respect to the sheet-form polyurethane resins molded by a mold of 1 mm, the hardness was measured in accordance with JIS K7311.

FLOW INITIATION TEMPERATURE

With respect to the sheet-form polyurethane resins (U1 to U8) molded by a mold of 1 mm, the flow initiation temperatures were measured by using a koka type flow tester (product name: CFT-500D, manufactured by Shimadzu Corporation). The measuring conditions were such that the diameter of the die was 1 mm, the length of the die was 10 mm, the load was 30 kg, the preheating was 5 minutes, the temperature raising initiation temperature was 80°C, and the temperature raising rate was 3°C/min. The measurement was continuously carried out during the process wherein the polyurethane resin became from solid to a fluid region via a rubber elastic region, whereby the temperature at which the resin started to flow from the die was taken as the flow initiation temperature.

MELT FLOW RATE (MFR)

With respect to the sheet-form polyurethane resins (U1 to U8) molded by a mold of 1 mm, MFR was measured by using a koka type flow tester (product name: CFT-500D, manufactured by Shimadzu Corporation). The measuring conditions were such that the diameter of the die was 1 mm, the length of the die was 1 mm, the load was 30 kg, the preheating was 5 minutes, and the measuring temperature was 180°C.

ADHESIVE PROPERTY TEST (SHEAR STRENGTH TEST)

Each of the sheet-form polyurethane resins (U1 to U8) molded by a mold of 150 $\mu$m, was sandwiched between two sheets of adherend and, while a pressure of 1 kgf/cm$^2$ was exerted, heated at from 140 to 180°C for 3 seconds or 10 seconds by contacting a hot plate of 2.5 cm $\times$ 2.5 cm. With respect to the obtained laminate, the shear strength (unit: kgf/cm$^2$) was measured by using a tensilon (the same as mentioned above) under a condition of the peeling speed of 200 mm/min. As the adherend, a polyester taffeta was used.
From the results of the respective tests as described above, evaluation of Examples 1 to 4 and Comparative Examples 1 to 4 was carried out as follows.

FLEXIBILITY

One having a 100% modulus value being at most 4.5 MPa was evaluated to be O (good), and one having a 100% modulus value exceeding 4.5 MPa was evaluated to be $\times$ (no good).

SHORT TIME ADHESIVE PROPERTY

Evaluation of the short time adhesive property was carried out based on the following standards.

◎ (Excellent): One bonded in a press bonding time of 3 seconds, underwent material failure in the adhesive property test.
○ (Good): The test specimen was bonded in a press bonding time of 3 seconds, and one bonded in a press bonding time of 10 seconds, underwent material failure in the adhesive property test.
Δ (Slightly good): The specimen was bonded in a press bonding time of 3 seconds, and one bonded in a press bonding time of 10 seconds, underwent interfacial delamination in the adhesive property test.
$\times$ (No good): The test specimen could not be bonded in a press bonding time of 3 seconds.

The results of the mechanical properties, flow initiation temperatures, MFR and adhesive property tests, and the evaluation results are shown in Table 5. In Table 5, "SP" represents "material failure", one with no indication represents "interfacial delamination" or "cohesion failure", and the shear strength being 0 indicates that the test specimen could not be bonded.

TABLE 5

| | | | Ex.1 | Ex.2 | Ex.3 | Ex.4 | Comp. Ex.1 | Comp. Ex.2 | Comp. Ex.3 | Comp. Ex.4 |
|---|---|---|---|---|---|---|---|---|---|---|
| Sheet-form polyurethane resin | | | U1 | U2 | U3 | U4 | U5 | U6 | U7 | U8 |
| Mechanical properties | Hardness (Shore A) | | 52 | 75 | 80 | 78 | 60 | 75 | 76 | 82 |
| | $M_{100}$ (MPa) | | 1.2 | 1.4 | 3.8 | 1.4 | 1.1 | 3.3 | 3.6 | 5.0 |
| | $M_{300}$ (MPa) | | 1.7 | 2.2 | 11.4 | 2.1 | 1.8 | 5.5 | 4.7 | 8.3 |
| | Ts (MPa) | | 10.5 | 14.4 | 53.0 | 5.2 | 4.1 | 7.8 | 16.7 | 24.6 |
| | Elongation (%) | | 1,100 | 660 | 580 | 820 | 1,000 | 560 | 700 | 580 |
| Flow initiation temperature (˚C) | | | 114 | 104 | 134 | 110 | 109 | 105 | 110 | 122 |
| MFR (180˚C) (g/10 min) | | | 10.2 | 6.6 | 2.8 | 4.1 | 32.2 | 41.0 | 37.0 | 2.0 |
| Adhesive property test (kgf/cm$^2$) | 140˚C | 3 seconds | 0.8 | 5.3 SP | 0.1 | 0.9 | 0.1 | 0.1 | 0 | 0 |
| | | 10 seconds | 3.2 SP | 4.4 SP | 1.8 | 2.0 SP | 0.3 | 0.4 | 0.1 | 2.1 |
| | 150˚C | 3 seconds | 1.1 | 2.1 | 0.1 | 1.8 | 0.1 | 0 | 0 | 0 |
| | | 10 seconds | 3.3 SP | 4.9 SP | 5.1 SP | 2.1 SP | 0.4 | 0.4 | 1.3 | 5.3 SP |
| | 160˚C | 3 seconds | 1.4 | 1.4 | 0.1 | 1.7 | 0.3 | 0.2 | 0 | 0 |
| | | 10 seconds | 4.0 SP | 4.7 SP | 5.3 SP | 2.2 SP | 0.7 | 0.88 | 0.8 | 4.8 SP |
| | 180˚C | 3 seconds | 2.2 SP | 4.6 SP | 0.6 | 2.2 SP | 0.6 | 0.8 | 0 | 0 |
| | | 10 seconds | 4.2 SP | 5.4 SP | 5.3 SP | 2.3 SP | 1.7 | 1.6 | 0.8 | 5.4 SP |
| Flexibility | | | ○ | ○ | ○ | ○ | ○ | ○ | ○ | × |
| Short time adhesive property | | | ○ | ◎ | ○ | ◎ | △ | △ | × | × |

The sheet-form polyurethane resin of Example 1 prepared by a prepolymer method by using a polyester ether diol (A) comprising the initiator (a), the dicarboxylic acid anhydride (b) and the alkylene oxide (c), had a flow initiation temperature of 114˚C and a MFR of 10.2 g/10 min. Further, in the adhesive property test, the flexibility was high, and the adhesive property in a short time was good. Similar results were obtained also in Examples 2 to 4.

On the other hand, the sheet-form polyurethane resins of Comparative Examples 1 to 3 employing no polyester ether diol (A) had a low adhesive property in a short time, although the melting temperature was low, and the flexibility was high. Likewise, the sheet-form polyurethane resin of Comparative Example 4 had a low flexibility and a low adhesive property in a short time, although the melting temperature was low.

INDUSTRIAL APPLICABILITY

The resin composition comprising a thermoplastic polyurethane, and the hot melt adhesive of the present invention, have low melting temperatures, are capable of providing adequate adhesive properties by heating for a short time and also have high flexibility. Therefore, they can be used as adhesives for e.g. clothing, from the viewpoint of e.g. a good drape, and they are very useful, since the cycle time in the bonding process can thereby be shortened.

The entire disclosure of Japanese Patent Application No. 2007-151607 filed on June 7, 2007 including specification, claims and summary are incorporated herein by reference in its entirety.

## Claims

1. A resin composition comprising a thermoplastic polyurethane which has structural units derived from a diol compound (I), a diisocyanate compound (II) and a chain extender (III), wherein ([II]+[III])/([I]+[II]+[III])=0.20 to 0.40 where [I], [II] and [III] are the proportions by mass (mass%) of the structural units derived from the diol compound (I), the diisocyanate compound (II) and the chain extender (III), respectively; a condition of $N_{II}/(M_I+M_{III})$=0.90 to 1.05 is satisfied, where $M_I$ is the number of moles of hydroxy groups in the diol compound (I), $N_{II}$ is the number of moles of isocyanate groups in the diisocyanate compound (II), and $M_{III}$ is the number of moles of functional groups reactive with the isocyanate groups in the chain extender (III); the diol compound (I) contains a polyester ether diol (A) which has structural units derived from an initiator (a) having two active hydrogen atoms per molecule, a dicarboxylic acid anhydride (b) and an alkylene oxide (c); and the structural units derived from the dicarboxylic acid anhydride (b) are contained in an amount of from 10 to 50 mass% in the polyester ether diol (A).

2. The resin composition comprising a thermoplastic polyurethane according to Claim 1, wherein the molar ratio of structural units derived from the dicarboxylic acid anhydride (b) and the alkylene oxide (c) in the polyester ether diol (A) is such that [amount (mol) of the alkylene oxide (c)]/[amount (mol) of the dicarboxylic acid anhydride]=50/50 to 95/5.

3. The resin composition comprising a thermoplastic polyurethane according to Claim 1 or 2, wherein the structural units derived from the initiator (a) are contained in an amount of from 1 to 60 mass% in the polyester ether diol (A).

4. The resin composition comprising a thermoplastic polyurethane according to any one of Claims 1 to 3, wherein the dicarboxylic acid anhydride (b) is phthalic anhydride.

5. The resin composition comprising a thermoplastic polyurethane according to any one of Claims 1 to 4, wherein the initiator (a) has a hydroxy value-based molecular weight of from 62 to 4,000.

6. The resin composition comprising a thermoplastic polyurethane according to any one of Claims 1 to 5, which is obtainable by reacting the diol compound (I) with the diisocyanate compound (II) to form an isocyanate group terminal prepolymer and thereafter, reacting the isocyanate group terminal prepolymer with the chain extender (III).

7. A process for producing a resin composition comprising a thermoplastic polyurethane, which comprises reacting a diol compound (I) with a diisocyanate compound (II) to form an isocyanate group terminal prepolymer and thereafter, reacting the isocyanate group terminal prepolymer with a chain extender (III), wherein ([II]+[III])/([I]+[II]+[III])=0.20 to 0.40 where [I], [II] and [III] are the proportions by mass (mass%) of the diol compound (I), the diisocyanate compound (II) and the chain extender (III), respectively; a condition of $N_{II}/(M_I+M_{III})$=0.90 to 1.05 is satisfied, where $M_I$ is the number of moles of hydroxy groups in the diol compound (I), $N_{II}$ is the number of moles of isocyanate groups in the diisocyanate compound (II), and $M_{III}$ is the number of moles of functional groups reactive with the isocyanate groups in the chain extender (III); the diol compound (I) contains a polyester ether diol (A) which has structural units derived from an initiator (a) having two active hydrogen atoms per molecule, a dicarboxylic acid anhydride (b) and an alkylene oxide (c); and the structural units derived from the dicarboxylic acid anhydride (b) are contained in an amount of from 10 to 50 mass% in the polyester ether diol (A).

8. A hot melt adhesive containing the resin composition comprising a thermoplastic polyurethane as defined in any one of Claims 1 to 6.

9. The hot melt adhesive according to Claim 8, which is an adhesive film for clothing fabric.

| INTERNATIONAL SEARCH REPORT | International application No. |
|---|---|
| | PCT/JP2008/059464 |

A. CLASSIFICATION OF SUBJECT MATTER
*C08G18/65*(2006.01)i, *C08G18/42*(2006.01)i, *C09J7/00*(2006.01)i, *C09J175/06* (2006.01)i

According to International Patent Classification (IPC) or to both national classification and IPC

B. FIELDS SEARCHED

Minimum documentation searched (classification system followed by classification symbols)
*C08G18/00-87*

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 3-72525 A (Asahi Glass Co., Ltd.), 27 March, 1991 (27.03.91), Claims; page 7, upper right column, line 5 to page 8, upper left column, line 16; page 9, upper right column, lines 4 to 12; lower right column, lines 7 to 20; page 10, example 4 on the table 2 & US 5145883 A  & EP 428737 A1 & WO 1990/013588 A1 | 1-9 |
| A | JP 2002-504578 A (Arco Chemical Technology, L.P.), 12 February, 2002 (12.02.02), Claims 1 to 29 & US 5854359 A  & EP 1217022 A2 & WO 1999/042512 A1 | 1-9 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 June, 2008 (07.06.08) | 17 June, 2008 (17.06.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 154 168 A1**

| | INTERNATIONAL SEARCH REPORT | International application No. |
|---|---|---|
| | | PCT/JP2008/059464 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-75982 A  (Rohm and Haas Co.),<br>11 March, 2004 (11.03.04),<br>Claims 1 to 10<br>& US 2003/0232956 A1    & EP 1371673 A1 | 1-9 |
| A | JP 2000-17035 A  (Sekisui Chemical Co., Ltd.),<br>18 January, 2000 (18.01.00),<br>Claims 1 to 13<br>& US 6579952 B1        & WO 1999/051656 A1 | 1-9 |
| A | JP 11-5833 A  (Mitsui Chemicals, Inc.),<br>12 January, 1999 (12.01.99),<br>Claims 1, 2<br>(Family: none) | 1-9 |
| A | JP 2001-11148 A  (Sekisui Chemical Co., Ltd.),<br>16 January, 2001 (16.01.01),<br>Claims 1, 2<br>(Family: none) | 1-9 |
| A | JP 2004-143314 A  (Asahi Glass Co., Ltd.),<br>20 May, 2004 (20.05.04),<br>Claims 1 to 9<br>(Family: none) | 1-9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000336142 A
- JP 2005126595 A
- WO 05116102 A
- WO 05010068 A
- JP 2007151607 A